# EUROPÄISCHE PATENTSCHRIFT

(11) **EP 4 115 503 B1**
(45) Veröffentlichungstag und Bekanntmachung des Hinweises auf die Patenterteilung: **07.08.2024**
(21) Anmeldenummer: 21707957.3
(22) Anmeldetag: 23.02.2021
(51) Int. Cl.: H02K 5/15, H02K 9/06, H02K 11/215, H02K 11/22, H02K 7/00, H02K 5/173, H02K 17/02, H02K 21/14

(54) **ELEKTROMOTOR MIT LÜFTERHAUBE UND RELATIV ZUR LÜFTERHAUBE DREHBAR GELAGERTER ROTORWELLE UND WINKELSENSOR**
ELECTRIC MOTOR WITH FAN COVER AND ROTOR SHAFT ROTATABLE TO FAN COVER AND ANGLE SENSOR
MOTEUR ÉLECTRIQUE AVEC CHAPOT DU VENTILATEUR ET ARBRE DE ROTOR TOURNANT DANS CHAPOT DU VENTILATEUR ET DÉTECTEUR ANGULAIRE

(30) Priorität: 03.03.2020 DE 102020001355
(43) Veröffentlichungstag der Anmeldung: 11.01.2023
(73) Patentinhaber: SEW-EURODRIVE GmbH & Co. KG, 76646 Bruchsal (DE)
(72) Erfinder: ZIMMERMANN, Andreas, 76227 Karlsruhe (DE)
(86) Internationale Anmeldenummer: PCT/EP2021/054426
(87) Internationale Veröffentlichungsnummer: WO 2021/175659

(56) Entgegenhaltungen:
- EP-A1- 2 113 989
- EP-A1- 2 639 942
- DE-A1- 102010 014 605
- DE-A1- 102014 007 212
- DE-A1- 19 806 661

## Beschreibung

Die Erfindung betrifft einen Elektromotor mit Lüfterhaube und relativ zur Lüfterhaube drehbar gelagerter Rotorwelle und Winkelsensor.

Es ist allgemein bekannt, dass ein Winkelsensor zur Erfassung der Winkellage der Rotorwelle an einem Elektromotor anordenbar ist.

**Aus der** DE 10 2013 012 850 A1 **ist ein Elektromotor mit Rotorwelle und Gehäuseteil bekannt.**

**Aus der** DD 1 28 614 A5 **ist eine flexible, selbsteinstellbare Gleitlagerung für Achsen** mit einem Durchmesser von maximal 3 mm, vorzugsweise zur Lagerung von Kleinstmotoren bekannt. Dabei ist ein Innenring über drei Stege mit einem Außenring verbunden, so dass eine radial gerichtete Kraft in drei Richtungen eine weite außermittige elastische Auslenkung des Außenrings zum Innenring bewirkt, so dass radiale Kräfte elastisch kompensierbar sind. In Umfangsrichtung, insbesondere in Drehrichtung, ist die Lagerung jedoch sehr steif, insbesondere torsionssteif ausgeführt.

Aus der DE 10 2014 007212 A1 ist als nächstliegender Stand der Technik eine Anordnung zur Erfassung der Winkellage einer Welle eines Elektromotors bekannt.

Aus der EP 2 113 989 A1 ist eine Drehmomentstütze zur Befestigung des Gehäuses eines Drehgebers an einem Elektromotor bekannt.

Aus der DE 10 2010 014605 A1 ist ein Drehgebersystem mit Drehgeber bekannt.

**Aus der** EP 2 639 942 A1 **ist eine Befestigungsvorrichtung zur Anbringung an einem Lüftungsgitter bekannt.**

**Aus der** DE 198 06 661 A1 **ist eine Statorkupplung bekannt.**

Der Erfindung liegt daher die Aufgabe zugrunde, einen Elektromotor weiterzubilden, wobei die Herstellung einfach und kostengünstig ausführbar sein soll.

Erfindungsgemäß wird die Aufgabe bei dem Elektromotor nach den in Anspruch 1 angegebenen Merkmalen gelöst.

Wichtige Merkmale der Erfindung bei dem Elektromotor sind, dass der Elektromotor mit Lüfterhaube und relativ zur Lüfterhaube drehbar gelagerter Rotorwelle und Winkelsensor vorgesehen ist,
wobei ein Gehäuse des Winkelsensors mit einer Drehmomentstütze verbunden ist, die mit der Lüfterhaube verbunden ist,
wobei die Drehmomentstütze einen Innenring und einen Außenring aufweist, die über innere Stege verbunden sind,
wobei der Außenring über äußere Stege der Drehmomentstütze mit der Lüfterhaube verbunden ist.

Von Vorteil ist dabei, dass mittels der Drehmomentstütze Toleranzen kompensierbar sind und trotzdem in Umfangsrichtung eine steife, insbesondere torsionssteife, Anbindung erreichbar ist. Somit ist das Gehäuse des Winkelsensors möglichst drehfest mit der Lüfterhaube verbunden und leitet somit Reaktionsmomente ab.

In axialer und in radialer Richtung sind mittels der Drehmomentstütze Toleranzen von Bauteilen einfach kompensierbar. Somit sind kostengünstige Bauteile einfach, also ohne besonderen Aufwand, herstellbar und zusammensetzbar.

Die äußeren Stege sind radial außerhalb der inneren Stege angeordnet. Somit ist der von den äußeren Stegen überdeckte Radialabstandsbereich beabstandet von dem von den inneren Stegen überdeckte Radialabstandsbereich. Radiale Toleranzen sind somit durch die gegenüber radialen Auslenkungen weniger steife Drehmomentstütze ausgleichbar, wobei in Umfangsrichtung eine größere Steifigkeit vorliegt.

Wichtig ist dabei, dass innere Stege mit äußeren Stegen zusammenwirken und somit der Außenring radial zwischengeordnet zwischen den inneren und den äußeren Stegen ist.

Vorzugsweise werden nur genau zwei innere und genau zwei äußere Stege verwendet.

Insbesondere gegenüber dem Stand der Technik ist somit in radialer Richtung eine besonders weiche und in Umfangsrichtung eine torsionssteife Drehmomentstütze erreicht.

Bei einer vorteilhaften Ausgestaltung sind die inneren Stege in Umfangsrichtung voneinander und jeweils von den äußeren Stegen beabstandet,
wobei die äußeren Stege in Umfangsrichtung voneinander und jeweils von den inneren Stegen beabstandet sind. Von Vorteil ist dabei, dass somit ist eine erste radial gerichtete Kraft, die zu einem inneren Steg hinzeigt, elastisch aufnehmbar, also durch entsprechende Verformung der in dieser Richtung wenig steifen Drehmomentstütze eine entsprechende Gegenkraft erzeugbar, da der Außenring zum Innenring hin außermittig ausgelenkt wird. Aber auch eine zweite radial gerichtete Kraft, die auf einen äußeren Steg hingerichtet ist, also einen anderen Umfangswinkel als die erste Kraft aufweist, ist elastisch aufnehmbar, also durch entsprechende Verformung der auch in dieser anderen Richtung wenig steifen Drehmomentstütze eine entsprechende Gegenkraft erzeugbar, da der Außenring zu den an der Lüfterhaube befestigten Laschenbereichen der Drehmomentstütze hin außermittig ausgelenkt wird.

Bei einer vorteilhaften Ausgestaltung sind die von den inneren und äußeren Stegen in Umfangsrichtung jeweils überdeckten Bereiche voneinander beabstandet und/oder überlappen einander nicht. Von Vorteil ist dabei, dass somit ist eine erste radial gerichtete Kraft, die zu einem inneren Steg hinzeigt, elastisch aufnehmbar, also durch entsprechende Verformung der in dieser Richtung wenig steifen Drehmomentstütze eine entsprechende Gegenkraft erzeugbar, da der Außenring zum Innenring hin außermittig ausgelenkt wird. Aber auch eine zweite radial gerichtete Kraft, die auf **einen äußeren Steg hingerichtet ist, also einen anderen Umfangswinkel als die erste Kraft aufweist, ist elastisch aufnehmbar, also durch entsprechende Verformung der auch in dieser anderen Richtung wenig steifen Drehmomentstütze eine entsprechende Gegenkraft erzeugbar, da der Außenring zu den an der Lüfterhaube befestigten Laschenbereichen der Drehmomentstütze hin außermittig ausgelenkt wird.**

Bei einer vorteilhaften Ausgestaltung ist **der von einem jeweiligen inneren oder äußeren Steg in Umfangsrichtung überdeckte Bereich von jedem von einem anderen inneren** oder äußeren Steg überdeckten Bereich beabstandet. Von Vorteil ist dabei, dass somit ist eine erste radial gerichtete Kraft, die zu einem inneren Steg hinzeigt, elastisch aufnehmbar, also durch entsprechende Verformung der in dieser Richtung wenig steifen Drehmomentstütze eine entsprechende Gegenkraft erzeugbar, da der Außenring zum Innenring hin außermittig ausgelenkt wird. Aber auch eine zweite radial gerichtete Kraft, die auf einen äußeren Steg hingerichtet ist, also einen anderen Umfangswinkel als die erste Kraft aufweist, ist elastisch aufnehmbar, also durch entsprechende Verformung der auch in dieser anderen Richtung wenig steifen Drehmomentstütze eine entsprechende Gegenkraft erzeugbar, da der Außenring zu den an der Lüfterhaube befestigten Laschenbereichen der Drehmomentstütze hin außermittig ausgelenkt wird.

Bei einer vorteilhaften Ausgestaltung überlappt der von einem jeweiligen inneren oder äußeren Steg in Umfangsrichtung überdeckte Bereich mit keinem von einem anderen inneren oder äußeren Steg überdeckten Bereich. Von Vorteil ist dabei, dass somit ist eine erste radial gerichtete Kraft, die zu einem inneren Steg hinzeigt, elastisch aufnehmbar, also durch entsprechende Verformung der in dieser Richtung wenig steifen Drehmomentstütze eine entsprechende Gegenkraft erzeugbar, da der **Außenring zum Innenring hin außermittig ausgelenkt wird. Aber auch eine zweite radial gerichtete Kraft, die auf einen äußeren Steg hingerichtet ist, also einen anderen Umfangswinkel als die erste Kraft aufweist, ist elastisch aufnehmbar, also durch entsprechende Verformung der auch in dieser anderen Richtung wenig steifen Drehmomentstütze eine entsprechende Gegenkraft erzeugbar, da der Außenring zu den an der Lüfterhaube befestigten Laschenbereichen der Drehmomentstütze hin außermittig ausgelenkt wird.**

**Bei einer vorteilhaften Ausgestaltung wechseln in Umfangsrichtung innere und äußere Stege einander ab und/oder sind voneinander gleichmäßig verteilt angeordnet. Von Vorteil ist dabei, dass eine in Umfangsrichtung gleichmäßige Abfederung von radialen Kräften oder Toleranzen bewirkbar ist.**

**Bei einer vorteilhaften Ausgestaltung gleicht die Anzahl der inneren Stege der Anzahl der äußeren Stege. Von Vorteil ist dabei, dass eine in Umfangsrichtung gleichmäßige Abfederung von radialen Kräften oder Toleranzen bewirkbar ist.**

**Bei einer vorteilhaften Ausgestaltung erstreckt sich jeder der Stege in Umfangsrichtung weiter als in radialer Richtung. Von Vorteil ist dabei, dass in Umfangsrichtung eine höhere Steifigkeit erreichbar ist als in radialer Richtung.**

Bei einer vorteilhaften Ausgestaltung ist der Außenring mittels in Umfangsrichtung voneinander beabstandeten inneren Stegen, insbesondere die sich in Umfangsrichtung stärker erstrecken als in radialer Richtung, verbunden mit dem Innenring,
wobei derjenige Verbindungsbereich, an welchem der jeweilige innere Steg mit dem Außenring verbunden ist, in Umfangsrichtung beabstandet ist von demjenigen Verbindungsbereich, an welchem der innere Steg mit dem Innenring verbunden ist,
insbesondere wobei die von einem jeweiligen der Verbindungsbereiche in Umfangsrichtung überdeckten Umfangswinkelbereiche voneinander in Umfangsrichtung beabstandet sind. Von Vorteil ist dabei, dass trotz hoher Steifigkeit in Umfangsrichtung eine effiziente Abdämpfung von radial und/oder axial gerichteten Schwingungsmoden bewirkbar ist.

**Erfindungsgemäß** ist der Innenring, insbesondere der jeweilige Verbindungsbereich zwischen dem Innenring und den jeweiligen, inneren Stegen, mit dem Gehäuse des Winkelsensors verbunden. Von Vorteil ist dabei, dass ein flächiges Anliegen des Innenrings erreicht ist und somit die Verbindungsebene am Gehäuse des Winkelsensors ausgerichtet ist.

**Erfindungsgemäß** weist die Drehmomentstütze, insbesondere der jeweilige äußere Steg einen jeweiligen, insbesondere nach radial außen hervorragenden, Laschenbereich auf, mit welchem die Lüfterhaube verbunden ist. Von Vorteil ist dabei, dass ein flächiges Anliegen an der Lüfterhaube erreichbar ist und somit die zugehörige Verbindungsebene an der Lüfterhaube, insbesondere am Lüftergitter der Lüfterhaube, ausgerichtet ist. Fertigungstoleranzen sind mittels der Drehmomentstütze ausgleichbar.

**Erfindungsgemäß** ist der jeweilige Laschenbereich mittels eines jeweiligen Befestigungsmittels, insbesondere jeweilige Schraube, an die Lüfterhaube angedrückt,
wobei die Schraube durch ein im jeweiligen Laschenbereich angeordnetes Loch hindurchgeführt ist. Von Vorteil ist dabei, dass die Drehmomentstütze die Laschenbereiche auf größerem Radialabstandsbereich aufweist als der Außenring, so dass die äußeren Stege diesen radialen Abstand überbrücken. Vorzugsweise ist ein jeweiliger äußerer Steg aber nicht im selben Umfangswinkelbereich mit dem Außenring verbunden, in welchem er mit dem jeweiligen Laschenbereich verbunden ist.

**Erfindungsgemäß** ist der jeweilige Laschenbereich mittels eines jeweiligen Befestigungsmittels, insbesondere Schraube, an die Lüfterhaube angedrückt. Von Vorteil ist dabei, dass das Befestigungsmittel durch eine Ausnehmung im Laschenbereich und durch eine Gitteröffnung des Lüftergitters der Lüfterhaube hindurchragt und beim Aufschrauben einer Mutter dann beidseitig andrückend wirkt, also den Laschenbereich an die Lüfterhaube andrückt insbesondere formschlüssig sichert.

**Erfindungsgemäß** wird der Innenring und/oder die Verbindungsbereiche von einer Schraube an das Gehäuse des Winkelsensors angedrückt. Von Vorteil ist dabei, dass eine einfache Befestigung erreichbar ist.

Bei einer vorteilhaften Ausgestaltung sind die Laschenbereiche von dem Innenring und von den Verbindungsbereichen radial beabstandet,
wobei die radiale Richtung auf die Drehachse der Rotorwelle bezogen ist. Von Vorteil ist dabei, dass eine hohe Torsionssteifigkeit erreichbar ist.

Bei einer vorteilhaften Ausgestaltung ist der jeweilige Verbindungsbereich vom jeweiligen Laschenbereich in Umfangsrichtung beabstandet. Von Vorteil ist dabei ebenfalls, dass eine hohe Torsionssteifigkeit erreichbar ist.

Bei einer vorteilhaften Ausgestaltung sind die Laschenbereiche von dem Außenring und von den äußeren Stegen jeweils radial, insbesondere in radialer Richtung, beabstandet,
wobei die radiale Richtung auf die Drehachse der Rotorwelle bezogen ist. Von Vorteil ist dabei ebenfalls, dass eine hohe Torsionssteifigkeit erreichbar ist.

Bei einer vorteilhaften Ausgestaltung ist der auf die Drehachse der Welle bezogene, vom Steg überdeckte Radialabstandsbereich zwischen dem von den Laschenbereichen überdeckten Radialabstandsbereich und dem von den Verbindungsbereichen überdeckten Radialabstandsbereich angeordnet oder überlappt mit diesen. Von Vorteil ist dabei, dass der Steg die Verbindung ausführt. Vorzugsweise münden je zwei der Stege in einen jeweiligen Laschenbereich und an ihrem anderen Ende in einem der Verbindungsbereiche. Dabei sind die Stege voneinander in Umfangsrichtung beabstandet.

Bei einer vorteilhaften Ausgestaltung ist der jeweilige Verbindungsbereich vom jeweiligen Laschenbereich in Umfangsrichtung beabstandet. Von Vorteil ist dabei ebenfalls, dass eine hohe Torsionssteifigkeit erreichbar ist.

Bei einer vorteilhaften Ausgestaltung ist die Rotorwelle mittels eines in einem Lagerflansch des Elektromotors aufgenommenen Lagers drehbar gelagert,
wobei die Lüfterhaube mit dem Lagerflansch verbunden ist, insbesondere am Lagerflansch befestigt ist. Von Vorteil ist dabei, dass das Reaktionsmoment des Gehäuses des Winkelsensors über die Drehmomentstütze und die Lüfterhaube zum Lagerflansch ableitbar ist. Hingegen ist die Rotorwelle des Elektromotors mit der Welle des Winkelsensors verbunden.

Bei einer vorteilhaften Ausgestaltung weist der Winkelsensor eine relativ zum Gehäuse des Winkelsensors drehbare Welle aufweist, die drehfest mit der Rotorwelle verbunden ist. Von Vorteil ist dabei, dass die Winkellage der Rotorwelle erfassbar ist.

Bei einer vorteilhaften Ausgestaltung ist die Drehmomentstütze als eben ausgeführtes Stanzblech ausgebildet, wobei die Normale der das Stanzblech enthaltenden Ebene parallel zur Drehachse der Rotorwelle ausgerichtet ist. Von Vorteil ist dabei, dass in Umfangsrichtung, also mit einer Drehbewegung innerhalb der Ebene, eine hohe Steifigkeit erreichbar ist.

Bei einer vorteilhaften Ausgestaltung liegen die Laschenbereiche parallel am Lüftergitter der Lüfterhaube an. Von Vorteil ist dabei, dass eine in Umfangsrichtung steife Ausführung erreichbar ist und Torsionssteifigkeit der Drehmomentstütze auch mit einer entsprechend torsionssteifer Lüfterhaube verbindbar ist.

Bei einer vorteilhaften Ausgestaltung ist das Gehäuse des Winkelsensors auf der vom Lagerflansch abgewandten Seite der Lüfterhaube angeordnet. Von Vorteil ist dabei, dass der Winkelsensor an der von der Rotorwelle abgewandten Seite hervorragt.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von schematischen Abbildungen näher erläutert:

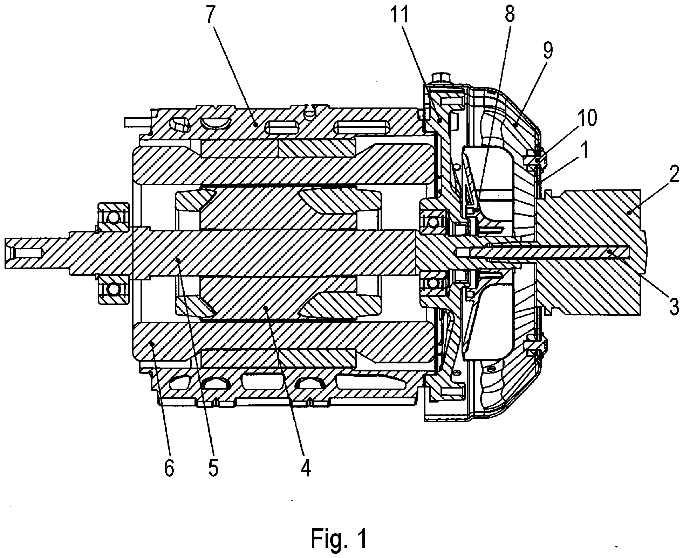

In der Figur 1 ist eine Schnittansicht durch einen erfindungsgemäßen Elektromotor dargestellt, welcher einen Winkelsensor zur Erfassung der Rotorlage der Rotorwelle des Elektromotors aufweist.

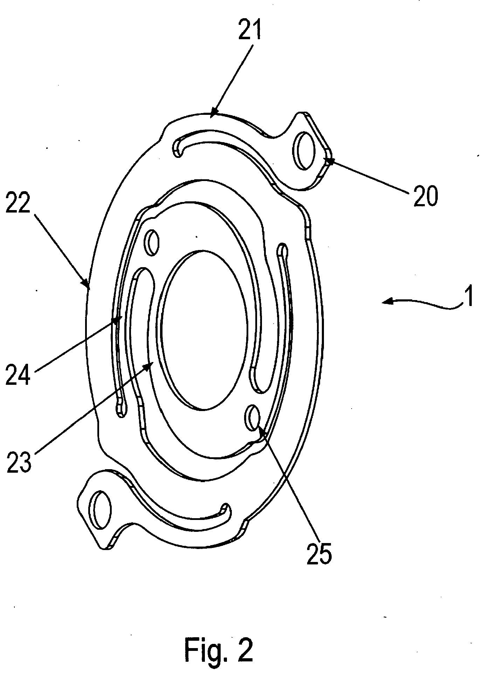

In der Figur 2 ist eine Drehmomentstütze 1, die einerseits mit dem Gehäuse 2 des Winkelsensors und andererseits mit einer Lüfterhaube 9 des Elektromotors verbunden ist, in Schrägansicht dargestellt.

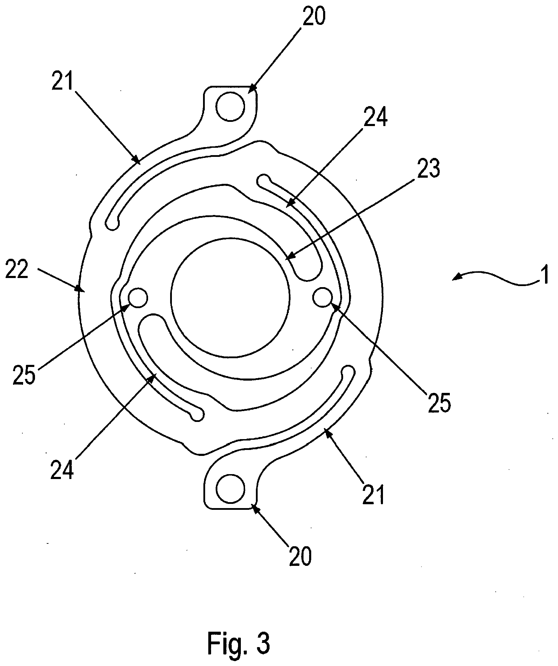

In der Figur 3 ist eine zur Figur 2 gehörige Draufsicht auf die Drehmomentstütze dargestellt.

Wie in den Figuren dargestellt, weist der erfindungsgemäße Elektromotor eine drehbar gelagerte Rotorwelle 5 auf, auf welche ein Aktivteil 4 aufgesteckt und drehfest verbunden ist, insbesondere wobei das Aktivteil 4 abhängig von der Ausführung des Elektromotors als Asynchronmotor oder Synchronmotor einen Kurzschlusskäfig oder Dauermagnete aufweist.

Zumindest eines der die Rotorwelle 5 drehbar lagernden Lager ist in einem Lagerflansch 11 aufgenommen, der mit einem Gehäuseteil 7 lösbar, insbesondere aber drehfest, verbunden ist. Radial innerhalb des Gehäuseteils 7 ist eine Statorwicklung 6 angeordnet und mit dem Gehäuseteil 7 drehfest verbunden.

Auf der von der Statorwicklung 6 abgewandten Seite des Lagerflansches 11 ist am Lagerflansch 11 eine Lüfterhaube 9 befestigt, welche einen mit der Rotorwelle 5 drehfest verbundenen Lüfter 8 radial umgibt.

Die Lüfterhaube 9 weist zwar ein Lüftergitter, insbesondere also in einem Gitter angeordnete durchgehende Ausnehmungen, auf, so dass der vom Lüfter geförderte Luftstrom durch das Lüftergitter hindurchführbar ist. Andererseits führt die Lüfterhaube 9 eine Schutzfunktion aus, indem die Berührung drehbar gelagerter Teile für Menschen verhindert ist.

Die Lüfterhaube 9 ist entweder aus Kunststoff als Kunststoffspritzgussteil hergestellt oder aus metallischem Blech als Stanz-Biegeteil oder als Stanz-Tiefziehteil.

Ein Winkelsensor zur Erfassung der Winkellage der Rotorwelle 5 weist eine Welle 3 auf, die relativ zu einem Gehäuse 2 des Winkelsensors drehbar, insbesondere relativ drehbar gelagert, ist zu einem Gehäuse 2 des Winkelsensors.

Das Gehäuse 2 des Winkelsensors ist mit einer Drehmomentstütze 1 verbunden, welche mit der Lüfterhaube 9 verbunden ist.

Diese Drehmomentstütze 1 ist derart ausgeführt, dass die Drehmomentstütze 1 gegen eine bezogen auf die Rotorwelle 5 in Umfangsrichtung gerichtete Verdrehung zwischen Gehäuseteil 2 des Winkelsensors und Lüfterhaube 9, insbesondere also gegen eine Torsionsartige Verdrehung, eine höhere Steifigkeit vorhanden ist als gegen eine axial gerichtete Verschiebung und auch gegen eine radial gerichtete Verschiebung.

Auf diese Weise sind Fertigungstoleranzen der Bauteile, beispielsweise der Lüfterhaube zusammen mit dem Lagerflansch 11 und/oder der Rotorwelle 5 zusammen mit der Welle 3 des Winkelsensors, ausgleichbar. Insbesondere führen Toleranzen in der axialen Ausdehnung oder in axialer Richtung zu einer axialen Fehlpositionierung des Gehäuses 2, welche jedoch ausgleichbar ist durch die in axialer Richtung wenig steife Drehmomentstütze 1.

Die Drehmomentableitung ist davon nicht beeinflussbar, da die Torsionssteifigkeit der Drehmomentstütze 1 sehr hoch ist und somit das Gehäuse 2 genügend drehfest über die Lüfterhaube 9 mit dem Lagerflansch verbunden ist.

Die Welle 3 des Winkelsensors ist drehfest mit der Rotorwelle 5 verbunden. Vorzugsweise wird hierzu eine kraftschlüssige Verbindung wie beispielsweise Spreizwellenverbindung oder Konuswellenverbindung eingesetzt.

Der Winkelsensor erzeugt ein Sensorsignal, das die Winkelstellung der Rotorwelle 5 relativ zum Gehäuseteil 7 codiert. Der Winkelsensor ist entweder nach einem magnetischen oder nach einem optischen Wirkprinzip ausgeführt.

Das im Lagerflansch 11 aufgenommene Lager der Rotorwelle 5 ist vorzugsweise als Festlager ausgeführt. Sogar eine Ausführung als Loslager ist ermöglicht, da die Drehmomentstütze 1 das Gehäuse des Winkelsensors mit der Lüfterhaube 9 koppelt.

Die Drehmomentstütze 1 liegt an einem vorzugsweise eben ausgeführten Lüftergitter der Lüfterhaube 9 an und ist mit zumindest einem Befestigungsmittel 10, insbesondere Schraube mit Mutter, an der Lüfterhaube 9 drehfest befestigt.

Axial zwischen Gehäuse 2 und dem Festlager ist ein Wellendichtring im Lagerflansch aufgenommen, der den Lagerflansch zur Rotorwelle 5 hin abdichtet. Hierzu steht die Dichtlippe des Wellendichtrings auf der Rotorwelle 5 an und berührt diese.

Die Drehmomentstütze 1 weist einen Außenring 22 auf, wobei ein radial beabstandet vom Außenring 22, aber radial innerhalb des Außenrings 22 angeordneter Innenring 23 an der Drehmomentstütze 1 ausgeformt ist.

Somit ist der vom Innenring 23 überdeckte Radialabstandsbereich beabstandet angeordnet von dem vom Außenring 22 überdeckten Radialabstandsbereich und ist radial innerhalb desselben angeordnet.

Der Außenring 22 ist mittels in Umfangsrichtung voneinander beabstandeten inneren Stegen 24 verbunden, die sich in Umfangsrichtung stärker erstrecken als in radialer Richtung, so dass der Verbindungsbereich zwischen dem jeweiligen inneren Steg 24 in Umfangsrichtung beabstandet ist vom Verbindungsbereich zwischen diesem jeweiligen inneren Steg 24 mit dem Außenring 22.

Die Drehmomentstütze 1 weist an ihrem radial äußeren Rand nach radial außen hervorstehende Laschenbereiche 20 mit jeweiligem Loch, insbesondere Durchgangsloch, auf, durch welche jeweils eines der Befestigungsmittel 10, insbesondere Schraube, geführt ist, das auch durch das Gitter der Lüfterhaube 9 hindurchragt, insbesondere so dass der Schraubenkopf des vorzugsweise als Schraube ausgeführten Befestigungsmittels 10 und eine auf einen Gewindebereich des Befestigungsmittels 10 aufgeschraubte Mutter die Drehmomentstütze 1 an die Lüfterhaube 9 andrücken.

Der jeweilige Laschenbereich 20 ist über einen jeweiligen äußeren Steg 21 mit dem Außenring 22 verbunden, wobei der Verbindungsbereich des jeweiligen Stegs 21 mit dem Außenring 22 in Umfangsrichtung beabstandet ist von dem jeweiligen Laschenbereich 20. Die Stege 21 erstrecken sich also in Umfangsrichtung weitere als in radialer Richtung.

Der von dem jeweiligen Laschenbereich 20 in Umfangsrichtung überdeckte Umfangswinkelbereich ist beabstandet von dem von dem Verbindungsbereich in Umfangsrichtung überdeckten Umfangswinkelbereich. Somit ist eine hohe Torsionssteifigkeit der Drehmomentstütze erreichbar.

Da auch die Stege 24 sich in Umfangsrichtung weiter erstrecken als in radialer Richtung, ist auch hierdurch eine hohe Torsionssteifigkeit der Drehmomentstütze unterstützbar.

Erfindungsgemäß ist, im als Befestigungsbereich 25 fungierenden Verbindungsbereich des Innenrings 23 mit dem jeweiligen inneren Steg 24, ein jeweiliges, axial durchgehendes Loch in der Drehmomentstütze 1 angeordnet. Durch dieses jeweilige, axial durchgehende Loch ist ein jeweiliges, weiteres Befestigungsmittel hindurchgeführt, welches die Drehmomentstütze an das Gehäuse 2 des Winkelsensors andrückt. Das weitere Befestigungsmittel ist vorzugsweise wiederum als Schraubteil ausgeführt, dessen Schraubenkopf beim Einschrauben des Schraubteils in eine axial gerichtete Gewindebohrung des Gehäuses 2 die Drehmomentstütze 1 an das Gehäuse 2 andrückt.

Die Löcher des Innenrings 23 stehen sich diametral gegenüber. Ebenso stehen sich die Löcher der Laschenbereiche 20 diametral gegenüber.

Vorzugsweise weist die Drehmomentstütze 1 zwei Symmetrieachsen auf, wobei die erste Symmetrieachse die in den Laschenbereichen 20 angeordneten Löcher schneidet und die zweite Symmetrieachse die in dem Innenring 23 beziehungsweise in den Verbindungsbereichen des Innenrings 23 mit den inneren Stegen 24 angeordnet sind.

Sowohl beim jeweiligen inneren Steg 24 als auch beim jeweiligen äußeren Steg 21 nimmt der Radialabstand in Umfangsrichtung zu. Innere und äußere Stege (21, 24) sind also als gleichgerichtete Spiralarme ausgeführt.

Die Drehmomentstütze 1 wird aus einem ebenen Blechteil gestanzt. Somit ist die Drehmomentstütze kostengünstig als Stanzteil fertigbar. Ein Biegen ist bei der Herstellung der Drehmomentstütze 1 vorteiligerweise nicht erforderlich.

Die Umfangsrichtung, der Radialabstand und die axiale Richtung sind stets auf die Drehachse der Rotorwelle bezogen.

Da die Drehmomentstütze 1 als flaches und ebenes Stanzteil aus Blech hergestellt ist, ist sie in einer Ebene angeordnet, deren Normalenrichtung parallel zur Drehachse der Rotorwelle ausgerichtet ist, und die Torsionssteifigkeit bezüglich einer auf die Drehachse bezogenen Torsion ist sehr hoch. Somit ist die Winkelerfassung mit dem Winkelsensor fehlerarm ausführbar.

In axialer Richtung ist eine Auslenkung der Laschenbereiche 20 relativ zur axialen Position des Innenrings 23, insbesondere zu den Befestigungsbereichen 25, mit geringem Kraftaufwand ermöglicht, da die Drehmomentstütze 1 gegenüber solchen Auslenkungen keine hohe Steifigkeit aufweist. Somit sind Fertigungstoleranzen ausgleichbar, ohne dass die Winkelerfassung verschlechtert wird.

Ebenso sind radiale Abweichungen durch elastische Auslenkung der Laschenbereiche 20 relativ zum Innenring 23, insbesondere zu den Befestigungsbereichen 25, aufnehmbar.

Die Stege 24 sind in Umfangsrichtung vorzugsweise voneinander regelmäßig beabstandet.

Vorzugsweise liegt der Innenring 23 am Gehäuse 2 des Winkelsensors an.

Jeder Steg 24 überdeckt einen Umfangswinkelbereich, welcher mehr als 60° überdeckt und insbesondere weniger als 90° ausgedehnt ist.

Die inneren Stege 24 sind in Umfangsrichtung voneinander beabstandet.

Die Lüfterhaube 9 selbst, insbesondere das Gitter der Lüfterhaube 9, sind steifer ausgeführt als die Drehmomentstütze 1.

Der von den inneren Stegen 24 überdeckte Radialabstandsbereich ist zwischen dem von dem Innenring 23 überdeckten Radialabstandsbereich angeordnet und dem von dem Außenring 22 überdeckten Radialabstandsbereich angeordnet.

Entsprechend beträgt ein Winkel zwischen der die Schwerpunkte der beiden Löcher der Laschenbereiche 20 verbindenden Verbindungslinie und der die Schwerpunkte der beiden Löcher der Befestigungsbereiche verbindenden Verbindungslinie betragsmäßig mehr als 60°, vorzugsweise aber 90°. Unter Schwerpunkt eines Lochs ist hier auch der Mittelpunkt zu verstehen.

Wenn vorzugsweise die beiden Verbindungslinien senkrecht zueinander ausgerichtet sind, ist eine hochgenaue Erfassung der Winkelwerte durch den Winkelsensor ermöglicht, da in Umfangsrichtung und entgegen der Umfangsrichtung die Torsionssteifigkeit denselben Werte, also keine Vorzugsrichtung, aufweist. Dies gilt auch bei Vorhandensein von axialen und radialen Toleranzabweichungen.

Die Drehmomentstütze 1, also ein Drehmomentstützteil, ist als Stanzteil einstückig und einteilig ausgeführt.

Die inneren und äußeren Stege (21, 23) oder zumindest deren Schwerpunkte sind in Umfangsrichtung voneinander beabstandet und/oder am Umfang gleichmäßig verteilt. Dabei wechseln die inneren Stege 21 und die äußeren Stege 23 sich in Umfangsrichtung einander ab. Die inneren Stege 21 sind radial beabstandet von den äußeren Stegen 23 und sind radial innerhalb der äußeren Stege 23 angeordnet.

Bei weiteren erfindungsgemäßen Ausführungsbeispielen sind statt zwei inneren Stegen 24 drei oder mehr, insbesondere in Umfangsrichtung regelmäßig voneinander beabstandete, vorgesehen.

### Bezugszeichenliste

1 Drehmomentstütze
2 Gehäuse, insbesondere Stator, des Winkelsensors
3 Welle, insbesondere Rotorwelle, des Winkelsensors
4 Aktivteil
5 Rotorwelle
6 Statorwicklung
7 Gehäuseteil
8 Lüfter
9 Lüfterhaube
10 Befestigungsmittel, insbesondere Schraube mit Mutter
11 Lagerflansch
20 Laschenbereich mit Loch, insbesondere Durchgangsloch
21 äußerer Steg
22 Außenring
23 Innenring
24 innerer Steg
25 Befestigungsbereich mit Loch, insbesondere Durchgangsloch

## Patentansprüche

1. Elektromotor mit Lüfterhaube (9) und relativ zur Lüfterhaube (9) drehbar gelagerter Rotorwelle (5) und Winkelsensor,
wobei ein Gehäuse (2) des Winkelsensors mit einer Drehmomentstütze (1) verbunden ist, die mit der Lüfterhaube (9) verbunden ist,
**wobei** die Drehmomentstütze (1) einen Innenring (23) und einen Außenring (22) aufweist, die über innere Stege (24) verbunden sind,
wobei der Außenring (22) über äußere Stege (21) der Drehmomentstütze (1) mit der Lüfterhaube (9) **über** Laschenbereiche (20) verbunden ist,
**dadurch gekennzeichnet, dass**
**derjenige Verbindungsbereich, an welchem der jeweilige innere Steg** (24) **mit dem Außenring** (22) **verbunden ist, in Umfangsrichtung von demjenigen Verbindungsbereich, an welchem der innere Steg** (24) **mit dem Innenring** (23) **verbunden ist,** beabstandet ist,
**wobei die von einem jeweiligen der Verbindungsbereiche in Umfangsrichtung überdeckten Umfangswinkelbereiche voneinander in Umfangsrichtung beabstandet sind,**
**wobei im jeweils als Befestigungsbereich (25) fungierenden Verbindungsbereich** des Innenrings (23) **mit dem jeweiligen inneren Steg (24) ein jeweiliges, axial durchgehendes Loch in der Drehmomentstütze (1) angeordnet ist, durch welches ein jeweiliges, weiteres Befestigungsmittel hindurchgeführt ist, welches die Drehmomentstütze (1) an das Gehäuse (2) des Winkelsensors andrückt,**
**wobei die Löcher** des Innenrings (23) **sich diametral gegenüberstehen,**
**wobei die** Drehmomentstütze (1), **insbesondere der jeweilige äußere** Steg (21), **einen jeweiligen, insbesondere nach radial außen hervorragenden, Laschenbereich** (20) **aufweist,**
**mit welchem die Lüfterhaube** (9) **verbunden ist,**
**wobei der jeweilige Laschenbereich** (20) **mittels** einer **jeweiligen** Schraube (10), **an die Lüfterhaube** (9) **angedrückt ist,**
**wobei die Schraube** (10) **durch ein im jeweiligen Laschenbereich** (20) **angeordnetes Loch hindurchgeführt ist,**
**wobei sich die Löcher der Laschenbereiche (20) diametral gegenüberstehen,**
**wobei der jeweilige Verbindungsbereich vom jeweiligen Laschenbereich** (20) **in Umfangsrichtung beabstandet ist.**

2. Elektromotor nach Anspruch 1,
**dadurch gekennzeichnet, dass**
**die inneren Stege** (24) **in Umfangsrichtung voneinander und jeweils von den äußeren Stegen** (21) **beabstandet sind,**
**wobei die äußeren Stege** (21) **in Umfangsrichtung voneinander und jeweils von den inneren Stegen** (21) **beabstandet sind,**
**und/oder dass**
**die von den inneren** (24) **und äußeren** (21) **Stegen in Umfangsrichtung jeweils überdeckten Bereiche voneinander beabstandet sind und/oder einander nicht überlappen,**
**und/oder dass**
**der von einem jeweiligen inneren** (24) **oder äußeren** (21) **Steg in Umfangsrichtung überdeckte Bereich von jedem von einem anderen inneren** (24) **oder äußeren** (21) **Steg überdeckten Bereich beabstandet ist,**
**und/oder dass**
**der von einem jeweiligen inneren** (24) **oder äußeren** (21) **Steg in Umfangsrichtung überdeckte Bereich mit keinem von einem anderen inneren** (24) **oder äußeren** (21) **Steg überdeckten Bereich überlappt.**

3. Elektromotor nach einem der vorangegangenen Ansprüche,
**dadurch gekennzeichnet, dass**
**in Umfangsrichtung innere** (24) **und äußere** (21) **Stege einander abwechseln und/oder voneinander gleichmäßig verteilt angeordnet sind,**
**und/oder dass**
**die Anzahl der inneren Stege** (24) **der Anzahl der äußeren Stege** (21) **gleicht,**
**und/oder dass**
**jeder der Stege** (21,24) **sich in Umfangsrichtung weiter erstreckt als in radialer Richtung,**

4. Elektromotor nach einem der vorangegangenen Ansprüche,
**dadurch gekennzeichnet, dass**
der Außenring (22) mittels in Umfangsrichtung voneinander beabstandeten inneren Stegen (24), insbesondere die sich in Umfangsrichtung stärker erstrecken als in radialer Richtung, mit dem Innenring (23) verbunden ist.

5. Elektromotor nach einem der vorangegangenen Ansprüche,
**dadurch gekennzeichnet, dass**
der Innenring (23), insbesondere der jeweilige Verbindungsbereich zwischen dem Innenring (23) und
den jeweiligen, inneren Stegen (24), mit dem Gehäuse (2) des Winkelsensors verbunden ist, insbesondere drehfest verbunden ist.

6. Elektromotor nach einem der vorangegangenen Ansprüche,
**dadurch gekennzeichnet, dass**
der Innenring (23) und/oder die Verbindungsbereiche von einer Schraube (10) an das Gehäuse (2) des Winkelsensors angedrückt wird.

7. Elektromotor nach einem der vorangegangenen Ansprüche,
**dadurch gekennzeichnet, dass**
die Laschenbereiche (20) von dem Außenring (22) und von den äußeren Steger (21) jeweils radial insbesondere in radialer Richtung, beabstandet sind,
wobei die radiale Richtung auf die Drehachse der Rotorwelle (5) bezogen ist

8. Elektromotor nach einem der vorangegangenen Ansprüche,
**dadurch gekennzeichnet, dass**
der auf die Drehachse der Rotorwelle (5) bezogene, vom jeweiligen inneren Steg (24) überdeckte Radialabstandsbereich zwischen dem von den Laschenbereichen (20) überdeckten Radialabstandsbereich und dem von den Verbindungsbereichen überdeckten Radialabstandsbereich angeordnet ist oder mit diesen überlappt.

9. Elektromotor nach einem der vorangegangenen Ansprüche,
**dadurch gekennzeichnet, dass**
die Rotorwelle (5) mittels eines in einem Lagerflansch (11) des Elektromotors aufgenommenen Lagers drehbar gelagert ist,
wobei die Lüfterhaube (9) mit dem Lagerflansch (11) verbunden ist, insbesondere am Lagerflansch (11) befestigt ist.

10. Elektromotor nach einem der vorangegangenen Ansprüche,
**dadurch gekennzeichnet, dass**
der Winkelsensor eine relativ zum Gehäuse (2) des Winkelsensors drehbare Welle aufweist, die drehfest mit der Rotorwelle (5) verbunden ist.

11. Elektromotor nach einem der vorangegangenen Ansprüche,
**dadurch gekennzeichnet, dass**
die Drehmomentstütze als eben ausgeführtes Stanzblech ausgebildet ist, wobei die Normale (5) der das Stanzblech enthaltenden Ebene parallel zur Drehachse der Rotortwelle ausgerichtet ist.
und/oder dass
die Drehmomentstütze (1) als eben ausgeführtes Stanzblech ausgebildet und in einer Ebene angeordnet ist, deren Normale parallel zur Drehachse der Rotorwelle (5) ausgerichtet ist

12. Elektromotor nach einem der vorangegangenen Ansprüche,
**dadurch gekennzeichnet, dass** (9)
die Laschenbereiche parallel am Lüftergitter der Lüfterhaube anliegen,
und/oder dass
das Gehäuse (2) des Winkelsensors auf der vom Lagerflansch (11) abgewandten Seite der Lüfterhaube (9) angeordnet ist.

## Claims

1. Electric motor comprising a fan cowl (9) and a rotor shaft (5) and angle sensor mounted rotatably relative to the fan cowl (9),
a housing (2) of the angle sensor being connected to a torque bracket (1), which is connected to the fan cowl (9),
the torque bracket (1) having an inner ring (23) and an outer ring (22), which are connected by means of internal ribs (24),
the outer ring (22) being connected to the fan cowl (9) via lug regions (20) by way of external ribs (21) of the torque bracket (1),
**characterised in that**
the connection region at which each internal rib (24) is connected to the outer ring (22) is arranged at a distance, in the circumferential direction, from the connection region at which the internal rib (24) is connected to the inner ring (23),
the respective circumferential-angle regions covered in the circumferential direction by the connection regions being arranged at a distance from one another in the circumferential direction,
an axially through-going hole being arranged in the torque bracket (1) in each connection region, acting as a fastening region (25), between the inner ring (23) and the relevant internal rib (24), a further fastening means being guided through each of said axially through-going holes and pressing the torque bracket (1) against the housing (2) of the angle sensor, the holes in the inner ring (23) being diametrically opposite one another,
the torque bracket (1), in particular each external rib (21), having respective lug regions (20), which in particular protrude radially outwards and to which the fan cowl (9) is connected, each lug region (20) being pressed against the fan cowl (9) by means of a respective screw (10),
the screw (10) being guided through a hole arranged in each lug region (20),
the holes in the lug regions (20) being diametrically opposite one another,
each connection region being arranged at a distance from the relevant lug region (20) in the circumferential direction.

2. Electric motor according to claim 1,
**characterised in that**
in the circumferential direction the internal ribs (24) are arranged at a distance from one another and in each case from the external ribs (21),
in the circumferential direction the external ribs (21) being arranged at a distance from one another and in each case from the internal ribs (21),
and/or **in that**
the regions covered respectively by the internal ribs (24) and external ribs (21) in the circumferential direction are arranged at a distance from one another and/or do not overlap with one another,
and/or **in that**
the region covered by a particular internal rib (24) or external rib (21) in the circumferential direction is arranged at a distance from each region covered by a different internal rib (24) or external rib (21),
and/or **in that**
the region covered by a particular internal rib (24) or external rib (21) in the circumferential direction does not overlap with any region covered by a different internal rib (24) or external rib (21).

3. Electric motor according to any of the preceding claims,
**characterised in that**
in the circumferential direction internal ribs (24) and external ribs (21) alternate with one another and/or are arranged in a manner uniformly spread out from one another,
and/or **in that**
the number of internal ribs (24) is the same as the number of external ribs (21),
and/or **in that**
each of the ribs (21, 24) extends further in the circumferential direction than in the radial direction.

4. Electric motor according to any of the preceding claims,
**characterised in that**
the outer ring (22) is connected to the inner ring (23) by means of internal ribs (24) which are arranged at a distance from one another in the circumferential direction, in particular which have a greater extension in the circumferential direction than in the radial direction.

5. Electric motor according to any of the preceding claims,
**characterised in that**
the inner ring (23), in particular the respective connection region between the inner ring (23) and each internal rib (24), is connected to the housing (2) of the angle sensor,
in particular non-rotatably connected.

6. Electric motor according to any of the preceding claims,
**characterised in that**
the inner ring (23) and/or the connection regions is/are pressed against the housing (2) of the angle sensor by a screw (10).

7. Electric motor according to any of the preceding claims,
**characterised in that**
each lug region (20) is arranged at a distance from the outer ring (22) and the external ribs (21) radially, in particular in the radial direction,
the radial direction being based on the axis of rotation of the rotor shaft (5).

8. Electric motor according to any of the preceding claims,
**characterised in that**
the radial-distance region covered by each internal rib (24), which radial-distance region is based on the axis of rotation of the rotor shaft (5), is arranged between or overlaps with the radial-distance region covered by the lug regions (20) and the radial-distance region covered by the connection regions.

9. Electric motor according to any of the preceding claims,
**characterised in that**
the rotor shaft (5) is rotatably mounted by means of a bearing received in a bearing flange (11) of the electric motor,
the fan cowl (9) being connected to the bearing flange (11), in particular being fastened to the bearing flange (11).

10. Electric motor according to any of the preceding claims,
**characterised in that**
the angle sensor has a shaft that is rotatable relative to the housing (2) of the angle sensor and connected to the rotor shaft (5) for conjoint rotation.

11. Electric motor according to any of the preceding claims,
**characterised in that**
the torque bracket is configured as a planar punched sheet, the normal (5) of the plane that contains the punched sheet being oriented in parallel with the axis of rotation of the rotor shaft,
and/or **in that**
the torque bracket (1) is configured as a planar punched sheet and is arranged in a plane of which the normal is oriented in parallel with the axis of rotation of the rotor shaft (5).

12. Electric motor according to any of the preceding claims,
**characterised in that**
the lug regions abut the fan grille of the fan cowl in parallel,
and/or **in that**
the housing (2) of the angle sensor is arranged on the side of the fan cowl (9) facing away from the bearing flange (11).

## Revendications

1. Moteur électrique doté d'un capot de ventilateur (9) et d'un arbre de rotor (5) monté rotatif par rapport au capot de ventilateur (9), et d'un capteur d'angle,
un boîtier (2) du capteur d'angle étant relié à un support de couple (1) qui est relié au capot de ventilateur (9),
le support de couple (1) présentant une bague intérieure (23) et une bague extérieure (22), qui sont reliées par des nervures intérieures (24),
la bague extérieure (22) étant reliée au capot de ventilateur (9) via des zones de languette (20) par l'intermédiaire de nervures extérieures (21) du support de couple (1),
**caractérisé en ce que**
la zone de liaison, au niveau de laquelle la nervure intérieure respective (24) est reliée à la bague extérieure (22), est espacée dans la direction circonférentielle de la zone de liaison au niveau de laquelle la nervure intérieure (24) est reliée à la bague intérieure (23),
les zones angulaires périphériques recouvertes dans la direction circonférentielle par l'une respective des zones de liaison étant espacées les unes des autres dans la direction circonférentielle,
un trou axial traversant respectif étant agencé dans le support de couple (1), à travers lequel passe un moyen de fixation supplémentaire respectif, qui presse le support de couple (1) au niveau du boîtier (2) du capteur d'angle, dans la zone de liaison de la bague intérieure (23) avec la nervure intérieure respective (24) agissant comme zone de fixation (25),
les trous de la bague intérieure (23) étant diamétralement opposés,
le support de couple (1), en particulier la nervure extérieure respective (21), présentant une zone de languette respective (20), en particulier faisant saillie radialement vers l'extérieur, à laquelle le capot de ventilateur (9) est relié,
la zone de languette respective (20) étant pressée contre le capot de ventilateur (9) au moyen d'une vis respective (10), la vis (10) étant passée à travers un trou agencé dans la zone de languette respective (20),
les trous des zones de languette (20) étant diamétralement opposés,
la zone de liaison respective étant espacée de la zone de languette respective (20) dans la direction circonférentielle.

2. Moteur électrique selon la revendication 1,
**caractérisé en ce que**
les nervures intérieures (24) sont espacées les unes des autres dans la direction circonférentielle, et respectivement des nervures extérieures (21),
les nervures extérieures (21) étant espacées circonférentiellement les unes des autres et respectivement des nervures intérieures (24),
et/ou **en ce que**
les zones recouvertes par les nervures intérieures (24) et extérieures (21) dans la direction circonférentielle sont espacées les unes des autres et/ou ne se chevauchent pas les unes les autres,
et/ou **en ce que**
la zone recouverte circonférentiellement par une nervure intérieure (24) ou extérieure (21) respective est espacée de toute zone recouverte par une autre nervure intérieure (24) ou extérieure (21),
et/ou **en ce que**
la zone recouverte circonférentiellement par une nervure intérieure (24) ou extérieure (21) respective ne chevauche aucune zone recouverte par une autre nervure intérieure (24) ou extérieure (21).

3. Moteur électrique selon l'une quelconque des revendications précédentes,
**caractérisé en ce que**
dans la direction circonférentielle, les nervures intérieures (24) et extérieures (21) sont agencées en alternance et/ou sont réparties uniformément les unes par rapport aux autres,
et/ou **en ce que**
le nombre de nervures intérieures (24) est égal au nombre de nervures extérieures (21),
et/ou **en ce que**
chacune des nervures (21, 24) s'étend plus loin dans la direction circonférentielle que dans la direction radiale.

4. Moteur électrique selon l'une quelconque des revendications précédentes,
**caractérisé en ce que**
la bague extérieure (22) est reliée à la bague intérieure (23) au moyen de nervures intérieures (24) espacées les unes des autres dans la direction circonférentielle, en particulier qui s'étendent plus fortement dans la direction circonférentielle que dans la direction radiale.

5. Moteur électrique selon l'une quelconque des revendications précédentes,
**caractérisé en ce que**
la bague intérieure (23), en particulier la zone de liaison respective entre la bague intérieure (23) et les nervures intérieures respectives (24), est reliée au boîtier (2) du capteur d'angle, en particulier est reliée de manière fixe en rotation.

6. Moteur électrique selon l'une quelconque des revendications précédentes,
**caractérisé en ce que**
la bague intérieure (23) et/ou les zones de liaison sont pressées contre le boîtier (2) du capteur d'angle par une vis (10).

7. Moteur électrique selon l'une quelconque des revendications précédentes,
**caractérisé en ce que**
les zones de languette (20) sont espacées radialement de la bague extérieure (22) et des nervures extérieures (21), en particulier dans la direction radiale,
la direction radiale étant liée à l'axe de rotation de l'arbre de rotor (5).

8. Moteur électrique selon l'une quelconque des revendications précédentes,
**caractérisé en ce que**
la zone de séparation radiale recouverte par la nervure intérieure respective (24) est agencée par rapport à l'axe de rotation de l'arbre de rotor (5) entre la zone de séparation radiale recouverte par les zones de languette (20) et la zone de séparation radiale recouverte par les zones de liaison, ou les chevauche.

9. Moteur électrique selon l'une quelconque des revendications précédentes,
**caractérisé en ce que**
l'arbre de rotor (5) est monté rotatif au moyen d'un palier logé dans une bride de palier (11) du moteur électrique,
le capot de ventilateur (9) étant relié à la bride de palier (11), en particulier étant fixé à la bride de palier (11).

10. Moteur électrique selon l'une quelconque des revendications précédentes,
**caractérisé en ce que**
le capteur d'angle présente un arbre rotatif par rapport au boîtier (2) du capteur d'angle, qui est relié de manière solidaire en rotation à l'arbre de rotor (5).

11. Moteur électrique selon l'une quelconque des revendications précédentes,
**caractérisé en ce que**
le support de couple (1) est conçu comme une tôle d'estampage réalisée plate, la normale (5) du plan contenant la tôle d'estampage étant orientée parallèlement à l'axe de rotation de l'arbre du rotor
et/ou **en ce que**
le support de couple (1) est conçu comme une tôle d'estampage réalisée plate et est agencé dans un plan dont la normale est orientée parallèlement à l'axe de rotation de l'arbre de rotor (5).

12. Moteur électrique selon l'une quelconque des revendications précédentes,
**caractérisé en ce que**
les zones de languette (20) sont parallèles à la grille de ventilation du capot de ventilateur (9),
et/ou **en ce que**
le boîtier (2) du capteur d'angle est agencé sur le côté du capot de ventilateur (9) opposé à la bride de palier (11).
